# EUROPEAN PATENT APPLICATION

(11) **EP 3 896 924 A1**
(43) Date of publication of application: **20.10.2021**
(21) Application number: 21168097.0
(22) Date of filing: 13.04.2021
(51) Int. Cl.: H04L 12/761, H04L 29/06, H04L 12/721

(54) **PACKET DETECTION METHOD AND FIRST NETWORK DEVICE**

(30) Priority: 13.04.2020 CN 202010287690
(71) Applicant: HUAWEI TECHNOLOGIES CO., LTD., Shenzhen, Guangdong 518129 (CN)
(72) Inventor: XIE, Jingrong, Shenzhen, 518129 (CN); XIA, Yang, Shenzhen, 518129 (CN); GENG, Xuesong, Shenzhen, 518129 (CN)
(74) Representative: Maiwald Patent- und Rechtsanwaltsgesellschaft mbH

(57) **Abstract**

This application provides a packet detection method. The method includes: obtaining, by a first network device, a bit index explicit replication BIER packet, where the BIER packet includes trap information, and the trap information is used to indicate whether the BIER packet is a valid BIER packet; determining, by the first network device, whether the trap information is valid; and determining, by the first network device, that the BIER packet is an invalid BIER packet when the first network device determines that the trap information is valid. According to the technical solutions provided in this application, the invalid BIER packet can be detected, to improve security in a BIER packet forwarding process or accuracy of BIER packet encapsulation.

## Description

### TECHNICAL FIELD

This application relates to the field of network communications, and more specifically, to a packet detection method and a first network device.

### BACKGROUND

An internet protocol (internet protocol, IP) multicast technology implements efficient point-to-multipoint data transmission on an IP network, thereby effectively saving network bandwidth and reducing network load. Therefore, a new technology for constructing a multicast data forwarding path is put forward in the industry, and is referred to as a bit index explicit replication (bit index explicit replication, BIER) technology. This technology proposes a new multicast technology architecture that does not need to construct a multicast distribution tree.

In a related technical solution, a BIER packet lacks some security mechanisms. Consequently, an invalid BIER packet may be replicated in large quantities in a BIER domain and sent to a device that does not need to receive multicast traffic. This causes a waste of link bandwidth, and even causes a denial of service (denial of service, DoS) on a link.

### SUMMARY

According to a packet detection method and a first network device provided in this application, an invalid BIER packet can be detected, to enhance security in a BIER packet forwarding process or accuracy of BIER packet encapsulation.

According to a first aspect, a packet detection method is provided. The method includes: A first network device obtains a bit index explicit replication BIER packet, where the BIER packet includes trap information, and the trap information is used to indicate whether the BIER packet is a valid BIER packet. The first network device determines whether the trap information is valid. The first network device determines that the BIER packet is an invalid BIER packet when the first network device determines that the trap information is valid.

In the foregoing technical solution, after obtaining the BIER packet, the first network device may determine, based on whether the trap information in the BIER packet is valid, whether the BIER packet is the valid BIER packet. In this way, on one hand, if an attacker tampers with the BIER packet, the trap information in the BIER packet is valid. The first network device may detect a behavior that the BIER packet is maliciously tampered with, or may increase a probability of detecting a behavior that the BIER packet is maliciously tampered with, thereby enhancing security in a BIER packet forwarding process. On the other hand, if a fault or an error occurs when a network device in a BIER domain encapsulates packet header information of the BIER packet, this case can further be detected by using the method provided in this application, thereby improving accuracy of BIER packet encapsulation.

Further, in the foregoing technical solution, the invalid BIER packet is identified, and an invalid device may further be locked, or whether a fault exists in a network device that forwards and processes the BIER packet may be determined.

In a possible implementation, the BIER packet includes a bit string BitString, and the BitString includes the trap information.

In another possible implementation, the trap information is one bit.

In another possible implementation, the trap information includes a plurality of bits.

In a possible implementation, at least two of the plurality of bits are not adjacent to each other.

In the foregoing technical solution, the at least two of the plurality of bits are set to be non-adjacent to each other, so that a plurality of traps are set in the BIER packet. This improves accuracy of BIER packet encapsulation or increases a probability of detecting a behavior that the BIER packet is maliciously tampered with.

In another possible implementation, at least two of the plurality of bits are adjacent to each other.

In another possible implementation, that the first network device determines that the BIER packet is an invalid BIER packet when the first network device determines that the trap information is valid includes: The first network device determines that the BIER packet is the invalid BIER packet when the first network device determines that any one of the plurality of bits is valid.

In another possible implementation, the method further includes: The first network device determines that the BIER packet is the valid BIER packet when the first network device determines that all the plurality of bits are invalid.

In another possible implementation, the method further includes: The first network device receives BIER information flooded by a second network device, where the second network device is an intermediate forwarding device in a BIER domain, the BIER domain includes the first network device, the BIER information includes a bit-forwarding router identifier BFR-ID of the second network device, and the BFR-ID is used to indicate that the second network device is an edge forwarding device in the BIER domain.

In another possible implementation, before that the first network device determines whether the trap information is valid, the method further includes: The first network device receives a control message, where the control message indicates the trap information in the BIER packet. The first network device obtains the trap information in the BIER packet based on the control message.

In another possible implementation, the method further includes: The first network device creates a first entry, where the first entry includes the trap information, and the first entry indicates to send an alarm or record log information when the trap information is valid; and sends the alarm or recording the log information when the first network device determines that the trap information is valid.

According to a second aspect, a first network device is provided. The first network device includes:
an obtaining module, configured to obtain a bit index explicit replication BIER packet, where the BIER packet includes trap information, and the trap information is used to indicate whether the BIER packet is a valid BIER packet; and
a determining module, configured to determine whether the trap information is valid, where
the determining module is further configured to determine that the BIER packet is an invalid BIER packet when it is determined that the trap information is valid.

In a possible implementation, the BIER packet includes a bit string BitString, and the bit string includes the trap information.

In another possible implementation, the trap information includes a plurality of bits.

In a possible implementation, at least two of the plurality of bits are not adjacent to each other.

In another possible implementation, the determining module is specifically configured to determine that the BIER packet is the invalid BIER packet when it is determined that any one of the plurality of bits is valid.

In another possible implementation, the determining module is further configured to determine that the BIER packet is the valid BIER packet when it is determined that all the plurality of bits are invalid.

In another possible implementation, the obtaining module is further configured to receive BIER information flooded by a second network device, where the second network device is an intermediate forwarding device in a BIER domain, the BIER domain includes the first network device, the BIER information includes a bit-forwarding router identifier BFR-ID of the second network device, and the BFR-ID is used to indicate that the second network device is an edge forwarding device in the BIER domain.

In another possible implementation, the obtaining module is further configured to receive a control message, where the control message indicates the trap information in the BIER packet; and obtain the trap information in the BIER packet based on the control message.

In another possible implementation, the first network device further includes: a creation module, configured to create a first entry, where the first entry includes the trap information, and the first entry indicates to send an alarm or record log information when the trap information is valid; and
the determining module is further configured to send the alarm or record the log information when it is determined that the trap information is valid.

Beneficial effects of the second aspect and any possible implementation of the second aspect are corresponding to beneficial effects of the first aspect and any possible implementation of the first aspect. Details are not described herein again.

According to a third aspect, a first network device is provided. The first network device has a function of implementing a behavior of the first network device in the foregoing methods. The function may be implemented based on hardware, or may be implemented based on hardware executing corresponding software. The hardware or the software includes one or more modules corresponding to the foregoing function.

In a possible design, a structure of the first network device includes a processor and an interface. The processor is configured to support the first network device in performing the corresponding function in the foregoing methods. The interface is configured to support the first network device in obtaining a BIER packet, or configured to support communication between the first network device and a second network device, and receive BIER information flooded by the second network device, or configured to support in receiving a control message. The first network device may further include a memory. The memory is configured to be coupled to the processor, and the memory stores a program instruction and data that are necessary for the first network device.

In another possible design, the first network device includes a processor, a transmitter, a receiver, a random access memory, a read-only memory, and a bus. The processor is separately coupled to the transmitter, the receiver, the random access memory, and the read-only memory through the bus. When the first network device needs to run, a bootloader in a basic input/output system or an embedded system that is built into the read-only memory is used to boot a system to start, and boot the first network device to enter a normal running state. After entering the normal running state, the first network device runs an application program and an operating system in the random access memory, so that the processor performs the method in any one of the first aspect or the possible implementations of the first aspect.

According to a fourth aspect, a first network device is provided. The first network device includes a main control board and an interface board, and may further include a switching board. The first network device is configured to perform the method in any one of the first aspect or the possible implementations of the first aspect. Specifically, the first network device includes a module configured to perform the method in any one of the first aspect or the possible implementations of the first aspect.

According to a fifth aspect, a first network device is provided. The first network device includes a controller and a first forwarding sub-device. The first forwarding sub-device includes an interface board, and may further include a switching board. The first forwarding sub-device is configured to perform a function of the interface board in the fourth aspect, and may further perform a function of the switching board in the fourth aspect. The controller includes a receiver, a processor, a transmitter, a random access memory, a read-only memory, and a bus. The processor is separately coupled to the receiver, the transmitter, the random access memory, and the read-only memory through the bus. When the controller needs to run, a bootloader in a basic input/output system or an embedded system that is built into the read-only memory is used to boot a system to start, and boot the controller to enter a normal running state. After the controller enters the normal running state, an application program and an operating system run in the random access memory, to enable the processor to perform a function of the main control board in the fourth aspect.

It may be understood that, in actual application, the first network device may include any quantity of interfaces, processors, or memories.

According to a sixth aspect, a computer program product is provided. The computer program product includes computer program code, and when the computer program code is run on a computer, the computer is enabled to perform the method according to any one of the first aspect or the possible implementations of the first aspect.

According to a seventh aspect, a computer-readable medium is provided. The computer-readable medium stores program code, and when the computer program code is run on a computer, the computer is enabled to perform the method according to any one of the first aspect or the possible implementations of the first aspect. These computer-readable storage devices include but are not limited to one or more of the following: read-only memory (read-only memory, ROM), programmable ROM (programmable ROM, PROM), erasable PROM (erasable PROM, EPROM), flash memory, electrical EPROM (electrically EPROM, EEPROM), and hard drive (hard drive).

According to an eighth aspect, a chip is provided. The chip includes a processor and a data interface, and the processor reads, by using the data interface, an instruction stored in a memory, to perform the method in any one of the first aspect or the possible implementations of the first aspect. In a specific implementation process, the chip may be implemented in a form of a central processing unit (central processing unit, CPU), a micro controller unit (micro controller unit, MCU), a micro processing unit (micro processing unit, MPU), a digital signal processing (digital signal processing, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

According to a ninth aspect, a system is provided. The system includes the foregoing first network device.

### BRIEF DESCRIPTION OF DRAWINGS

FIG. 1 is a schematic networking diagram of a BIER technology according to an embodiment of this application;
FIG. 2 is a schematic diagram of a possible BIER header format according to an embodiment of this application;
FIG. 3 is a schematic block diagram of another possible BIER header format;
FIG. 4 shows a process of creating a BIER forwarding table and forwarding a BIER packet based on a BIER technology;
FIG. 5 is a schematic diagram of a possible packet format of BIERv6 encapsulation according to an embodiment of this application;
FIG. 6 is a schematic flowchart of a packet detection method according to an embodiment of this application;
FIG. 7 is a schematic diagram of a packet detection scenario according to an embodiment of this application;
FIG. 8 is a schematic diagram of another packet detection scenario according to an embodiment of this application;
FIG. 9 is a schematic diagram of another packet detection scenario according to an embodiment of this application;
FIG. 10 is a schematic structural diagram of a first network device 1000 according to an embodiment of this application;
FIG. 11 is a schematic structural diagram of hardware of a first network device 2000 according to an embodiment of this application; and
FIG. 12 is a schematic structural diagram of hardware of another first network device 2100 according to an embodiment of this application.

### DESCRIPTION OF EMBODIMENTS

The following describes technical solutions of this application with reference to accompanying drawings.

All aspects, embodiments, or features are presented in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "for example", "such as" are used to represent giving an example, an illustration, or a description. Any embodiment or design scheme described as an "example" in this application should not be explained as being more preferred or having more advantages than another embodiment or design scheme. Exactly, "for example" is used to present a concept in a specific manner.

In the embodiments of this application, "corresponding (corresponding, relevant)", and "corresponding (corresponding)" may be interchangeably used sometimes. It should be noted that meanings expressed by the terms are consistent when differences are not emphasized.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized. The terms "include", "comprise", "have", and their variants all mean "include but are not limited to", unless otherwise specifically emphasized.

In this application, "at least one" means one or more, and "a plurality of' means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one item (piece) of the following" or a similar expression thereof refers to any combination of these items, including any combination of a singular item (piece) or plural items (pieces). For example, at least one of a, b, or c may indicate: a, b, c, a and b, a and c, b and c, or a, b, and c, where a, b, and c may be singular or plural.

Multicast (multicast) is a data transmission mode in which data is efficiently sent at a same time to a plurality of receivers on a transmission control protocol (transmission control protocol, TCP)/internet protocol (internet protocol, IP) network by using one multicast address. A multicast source sends a multicast stream to a multicast group member in a multicast group through a link in the network, and each multicast group member in the multicast group can receive the multicast stream. A multicast transmission mode implements a point-to-multipoint data connection between the multicast source and the multicast group member. The multicast stream needs to be transmitted only once on each network link, and the multicast stream is replicated only when a branch of the link exists. Therefore, the multicast transmission mode improves data transmission efficiency and reduces a possibility of congestion on a backbone network.

An internet protocol (internet protocol, IP) multicast technology implements efficient point-to-multipoint data transmission on an IP network, thereby effectively saving network bandwidth and reducing network load. Therefore, the internet protocol multicast technology is widely used in a plurality of aspects such as real-time data transmission, a multimedia conference, data copying, interactive protocol television (internet protocol television, IPTV), a game, and simulation. The multicast technology uses a multicast protocol to construct a control plane multicast tree, and then uses the multicast tree to make a network plane be in a logical tree-like structure, to implement multicast point-to-multipoint data forwarding. Each intermediate node with a core of constructing a distribution tree needs to maintain a complex multicast forwarding information state. As a network scale becomes larger and multicast data traffic increases, this multicast technology faces increasingly high costs and operation and maintenance challenges.

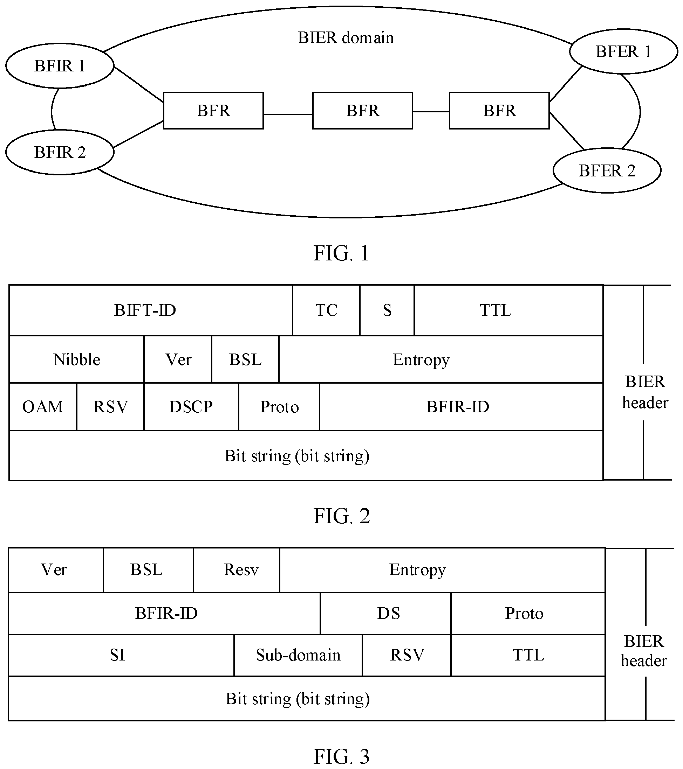

Therefore, a new technology for constructing a multicast data forwarding path is put forward in the industry, and is referred to as a bit index explicit replication (bit index explicit replication, BIER) technology. This technology proposes a multicast technology architecture that does not need to construct a multicast distribution tree. As shown in FIG. 1, a router that supports the BIER technology is referred to as a bit-forwarding router (Bit-forwarding router, BFR), and the BFR may receive and forward a BIER packet. A multicast forwarding domain including one or more BFRs is referred to as a BIER domain (BIER domain). At an ingress of the BIER domain, a BFR that performs BIER encapsulation on an original multicast data packet is referred to as a bit-forwarding ingress router (bit forwarding ingress router, BFIR). At an egress of the BIER domain, a BFR that performs decapsulation to obtain the original multicast data packet from the BIER packet is referred to as a bit-forwarding egress router (bit forwarding egress router, BFER). It should be understood that the BFIR and the BFER in the BIER domain may be referred to as an edge BFR in the BIER domain.

For ease of understanding, the following describes in detail a BIER related technology with reference to FIG. 2 to FIG. 5.

In the BIER domain, a globally unique bit position (bit position) identifier may be configured for the edge BFR in an entire BIER sub-domain (sub domain, SD). As an example, a value is configured for each edge BFR as a BFR identifier (BFR identifier, BFR ID). For example, the BFR ID may be a value ranging from 1 to 256. All BFR IDs in the BIER domain form one bit string (BitString).

In this embodiment of this application, when the original multicast data packet is transmitted in the BIER domain, a specific BIER header needs to be additionally encapsulated. The BIER header uses the BitString to mark all destination nodes of the original multicast data packet. The BFR in the BIER domain may perform forwarding based on a bit index forwarding table (bit index forwarding table, BIFT) and the BitString carried in the BIER header, to ensure that the original multicast data packet can be sent to all destination addresses.

It should be noted that the destination node of the original multicast data packet in this application may be a set of a plurality of BFERs. For ease of description, the set of the plurality of BFERs to which the original multicast data packet needs to be sent is referred to as the destination node below.

It should be understood that the original multicast data packet after the BIER header may be an internet protocol version 6 (internet protocol version 6, IPv6) multicast packet, or may be an internet protocol version 4 (internet protocol version 4, IPv4) multicast packet. This is not specifically limited in this application.

There may be a plurality of BIER encapsulation types. This is not specifically limited in this application. As an example, the BIER packet may be encapsulated by using multi-protocol label switching (multi-protocol label switching, MPLS), and such encapsulation may be referred to as BIER-MPLS encapsulation. As another example, the BIER packet may be encapsulated based on the internet protocol version 6 (internet protocol version 6, IPv6), and such encapsulation may be referred to as BIERv6 encapsulation.

The following describes in detail a BIER-MPLS encapsulation related technology with reference to FIG. 2 to FIG. 4.

A BIER header format is not specifically limited in this embodiment of this application, provided that the BIER header includes the bit string (BitString) field. With reference to FIG. 2 and FIG. 3, the following separately describes in detail two possible BIER header formats.

FIG. 2 is a schematic block diagram of a possible BIER header format. As shown in FIG. 2, the BIER header may include but is not limited to: a bit index forwarding table identifier (bit index forwarding table identifier, BIFT ID) field with a length of 20 bits, a bit string length (BitString length, BSL) field, and another field with a length of 64 bits (8 bytes), for example, a traffic class (traffic class, TC) field, a stack (stack, S) field, a time to live (time to live, TTL) field, an entropy (entropy) field, a version (version, Ver) field, a proto field, and the like that are of the original multicast data packet after the BIER header.

The following describes the fields in the BIER header in detail.

### (1) BIFT ID field

The length of the BIFT ID field is 20 bits. Under BIER-multi-protocol label switching (multi protocol label switching, MPLS) encapsulation, the BIFT ID field is an MPLS label (label, L). The MPLS label may be referred to as a BIER label, and the fields after the BIFT ID field, such as the TC/S/TTL field, are in a standard label encoding format. The following separately describes the fields such as the TC/S/TTL field, and details are not described herein temporarily.

The BIFT ID may be a BIFT-id, and may include a combination of a sub-domain (sub-domain, SD)/bit string length (BitString length, BSL)/set identifier (set identifier, SI). Different BIFT IDs may correspond to different combinations of SD/BSL/SI.

It should be understood that different BIFT IDs may be mapped to different combinations of SD/BSL/SI. The BIER header format shown in FIG. 2 does not directly include the SD/BSL/SI field. The SD, BSL, and SI are three implicit fields, and a value of the SD/BSL/SI needs to be obtained through mapping based on the BIFT ID field.

### 1. Sub-domain (sub-domain, SD)

One BIER domain may be divided and configured into different sub-domains SDs based on requirements of an actual service scenario, to support features such as an interior gateway protocol (interior gateway protocol, IGP) multi-topology. Each BIER domain needs to include at least one sub-domain, namely, a default sub-domain 0. When the BIER domain is divided into a plurality of sub-domains, each BFR in the BIER domain needs to be configured with all sub-domains. For example, one sub-domain 0 may be configured on each BFR in the BIER domain and a system default topology is used. Then, one sub-domain 1 may be configured and a multicast topology is used.

Each sub-domain SD is represented by a sub-domain identifier (sub-domain identifier, SD-ID). For example, a value of the SD-ID ranges from 0 to 255, and a length is 8 bits. As an example, based on different virtual private networks (virtual private network, VPN), the BIER domain may be configured with different SDs, and different VPNs are configured to use the different SDs. For example, a VPN 1 uses an SD 0, and a VPN 2 uses an SD 1.

It should be noted that a plurality of VPNs may alternatively use a same SD, and the different SDs in the BIER domain may be in a same interior gateway protocol (interior gateway protocol, IGP) process or topology, or may not be in a same IGP process or topology. This is not specifically limited in this embodiment of this application.

### 2. Bit string length (BitString length, BSL)

The BSL is a length of a BitString included in the BIER header. There may be a plurality of BSL types. This is not specifically limited in this embodiment of this application. A minimum length of the BSL is 64 bits. A length of the BSL may be successively 128 bits, 256 bits, 512 bits, 1024 bits, or 2048 bits. A maximum length of the BSL is 4096 bits. Specifically, four bits are used for identification in the packet. For example, when the length of the BSL is 64 bits, 0001 is used for identification in the packet; when the length of the BSL is 128 bits, 0010 is used for identification in the packet; when the length of the BSL is 512 bits, 0100 is used for identification in the packet; when the length of the BSL is 1024 bits, 0101 is used for identification in the packet, and so on.

### 3. Set identifier (set identifier, SI)

If a quantity of BFER nodes in a network is greater than 256, to adapt to this situation, BIER encapsulation not only includes one BitString, but also includes one set identifier (set identifier, SI). The SI is used to divide BIER node numbers into different ranges to support larger-scale network addressing.

The SI may be understood as a set including a plurality of edge BFRs or configured BFR IDs in the network. As an example, when the length of the BSL is 256 bits, but there are more than 256 edge BFRs or 256 configured BFR IDs in the network, these edge BFRs or BFR IDs need to be divided into different sets. For example, 256 edge BFRs whose BFR IDs are 1 to 256 are a set 0 (set index 0, or SI = 0), and 256 edge BFRs whose BFR IDs are 257 to 512 are a set 1 (set index 1, or SI = 1).

After receiving a BIER packet, the BFR in the BIER domain may determine, based on a BIFT ID in a BIER header, a combination including an SD to which the BIER packet belongs, a used BSL, and an SI of the BSL to which the packet belongs.

The following lists several possible combinations of SD/BSL/SI represented by the BIFT ID:
BIFT ID = 1: corresponding to SD 0, BSL 256, SI 0//equivalent to SD 0/BSL 256/SI 0;
BIFT ID = 2: corresponding to SD 0, BSL 256, SI 1//equivalent to SD 0/BSL 256/SI 1;
BIFT ID = 3: corresponding to SD 0, BSL 256, SI 2//equivalent to SD 0/BSL 256/SI 2;
BIFT ID = 4: corresponding to SD 0, BSL 256, SI 3//equivalent to SD 0/BSL 256/SI 3;
BIFT ID = 5: corresponding to SD 0, BSL 512, SI 0//equivalent to SD 0/BSL 512/SI 0;
BIFT ID = 6: corresponding to SD 0, BSL 512, SI 1//equivalent to SD 0/BSL 512/SI 1;
BIFT ID = 7: corresponding to SD 1, BSL 256, SI 0//equivalent to SD 1/BSL 256/SI 0;
BIFT ID = 8: corresponding to SD 1, BSL 256, SI 1//equivalent to SD 1/BSL 256/SI 1;
BIFT ID = 9: corresponding to SD 1, BSL 256, SI 2//equivalent to SD 1/BSL 256/SI 2;
BIFT ID = 10: corresponding to SD 1, BSL 256, SI 3//equivalent to SD 1/BSL 256/SI 3;
BIFT ID = 11: corresponding to SD 1, BSL 512, SI 0//equivalent to SD 1/BSL 512/SI 0; and
BIFT ID = 12: corresponding to SD 1, BSL 512, SI 1//equivalent to SD 1/BSL 512/SI 1.

It should be noted that a value of the BIFT ID field corresponds to a triplet of <SD, BSL, SI>. The BIFT-id field may be used to obtain unique <SD, BSL, SI> information. The unique <SD, BSL, SI> information has the following function: The length of the BitString in the BIER packet header is obtained through the BSL, to obtain a length of the entire BIER packet header. It can be learned from BSL and SI information whether the BitString represents the BFR-ID ranging from 1 to 256 or the BFR-ID ranging from 257 to 512. A corresponding forwarding table may be found based on SD information.

### (2) Bit string (BitString) field

Each bit in the BitString is used to identify an edge BFR. For example, a least significant bit (rightmost bit) of the BitString is used to identify a BFER whose BFR-ID is 1. The second bit from right to left in the BitString is used to identify a BFER whose BFR-ID is 2. In a forwarding entry that is depended on by forwarding by a forwarding plane, that a packet is to be sent to BFERs is determined based on a BitString in the packet. When the BFR in the BIER domain receives a packet header that includes a BIER, the BFR forwards a BIER packet based on the BitString and a BIFT ID that are carried in the BIER header.

It should be noted that, if a value of a bit is 1, it represents that the packet needs to be sent to a BFER node represented by the BFR-ID, or if a value of a bit is 0, it represents that the packet does not need to be sent to a BFER node represented by the BFR-ID.

BIFT ID = 2 is used as an example. After receiving the BIER packet, the BFR may determine, based on the BIFT ID in the BIER header, that the BIER packet belongs to an SD 0. A length of the BSL used in the BIER header is 256 bits, and the BIFT ID belongs to a set 1 (including a set of 256 edge BFRs whose BFR IDs are 257 to 512).

### (3) Traffic type (traffic class, TC) field

The traffic type (traffic class, TC) field is used to identify a priority of a packet.

### (4) Stack (stack, S) field

S is a mark at a bottom of a stack. In a BIER packet header, a value of the mark is 1. In other words, an MPLS label is a bottommost label of an entire label stack.

### (5) Version (version, Ver) field

A length of the version field is 4 bits, and the version field is used to identify an IP version number. A value being 4 indicates IPv4, and a value being 6 indicates IPv6.

### (6) Entropy (entropy) field

Entropies of a plurality of packets belonging to one traffic are the same, and entropies of a plurality of packets belonging to different traffic are different. When the packet is forwarded, different traffic may be distributed to different links based on entropies, and a plurality of packets of same traffic are forwarded through a same link.

### (7) Proto field

The proto field is used to identify a payload format after the BIER packet header. For example, values being 4 and 6 respectively represent an IPv4 packet and an IPv6 packet. A value being 2 represents an MPLS packet of an upstream assigned label, and is a proto value used in a multicast virtual private network (multicast virtual private network, MVPN) over BIER. A reason for using the upstream assigned label is that multicast is point-to-multipoint sending, a transmit-end provider edge (provider edge, PE) device may allocate a unique label and send the unique label to a receive-end PE device through a control plane, and a data packet uses the label allocated by the transmit-end PE device and is identified at the receive-end PE device. For the receive-end PE device, the label is not allocated by the receive-end PE device but allocated by the transmit-end PE device, and is referred to as the upstream assigned label.

### (8) Nibber field

A length of the nibber field is four bits with a fixed value of 0101. This field is used to distinguish services carried by MPLS, such as BIER, IPv4, and IPv6. During MPLS encapsulation and forwarding, an IPv4 or IPv6 header after a label stack is checked to support ECMP.

### (9) BFIR-id field

The BFIR-id field is used to identify a BFR-ID of a BFIR. A BFIR node uses a sub-domain to encapsulate and send a BIER packet, and the BFIR-id field is used to write a BFR-ID of the node in the sub-domain.

### (10) BitString field

The bit string field is a character string of a destination node set of a BIER packet.

FIG. 3 is a schematic block diagram of another possible BIER header format. Compared with the BIER header format shown in FIG. 2, the BIER header format shown in FIG. 3 does not include the BIFT-ID field, but includes three fields: the SD field, the BSL field, and the SI field. In other words, the BIER header format shown in FIG. 3 directly includes the three fields: the SD field, the BSL field, and the SI field, and a value of the SD/BSL/SI field does not need to be mapped from the BIFT ID field.

It should be noted that fields included in the BIER header format shown in FIG. 3 are similar to the fields included in the BIER header format shown in FIG. 2. For specific descriptions of the fields in the BIER header format shown in FIG. 3, refer to the descriptions in FIG. 2. Details are not described herein again.

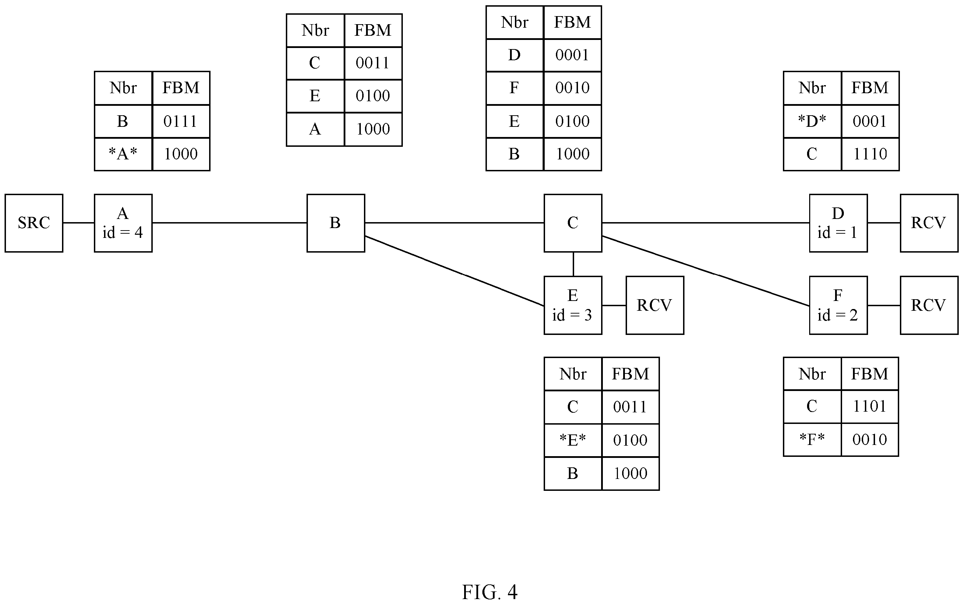

The following in FIG. 4 describes in detail a process of creating a BIER forwarding table based on a BIER technology and forwarding a BIER packet.

A BIER domain shown in FIG. 4 may include a node A to a node F. The node A, the node D, the node E, and the node F are edge BFRs in the BIER domain, and the node B and the node C are BIER intermediate forwarding nodes. Specifically, the node A is located at an ingress of the BIER domain, and is responsible for performing BIER encapsulation on an original multicast data packet. The node A corresponds to the BFIR in FIG. 1. The node D, the node E, and the node F are located at an egress of the BIER domain, and are responsible for performing decapsulation to obtain the original multicast data packet from the BIER packet. The node D, the node E, and the node F correspond to the BFIR in FIG. 1.

In this embodiment of this application, a unique BFR-ID may be allocated to an edge BFR in each BIER domain. For example, in FIG. 4, BFR-IDs configured for the node A, the node D, the node E, and the node F are respectively 4, 1, 2, and 3. BFR-IDs are not allocated to BFRs that perform intermediate forwarding, such as, the node B and the node C.

It should be noted that in the embodiments of this application, "ID", and "id" may be interchangeably used sometimes. It should be noted that meanings expressed by the terms are consistent when differences are not emphasized. The BFR-ID in this application corresponds to the id in FIG. 4.

A BitString encapsulated in a BIER header of data traffic marks all destination nodes of the traffic. For example, a BitString corresponding to the node D whose BFR-ID is 1 is 0001, a BitString corresponding to the node F whose BFR-ID is 2 is 0010, a BitString corresponding to the node E whose BFR-ID is 3 is 0100, and a BitString of the node A whose BFR-ID is 4 is 1000.

It should be understood that a value of the BFR-ID allocated to the edge BFR in each BIER domain may be flooded to another BFR in the BIER domain according to a routing protocol, and flooded BIER information further includes an IP address and encapsulation information of the edge BFR. For example, flooded BIER information of the node A carries an IP address and an BIFT-id of the node A. The BFR (for example, the node F in FIG. 4) in the BIER domain may create a BIFT entry based on the flooded BIER information, so that after the node F in FIG. 4 receives the BIER packet, the BIER packet is forwarded to a destination node based on the created BIFT entry.

For the node A, if the BIER packet needs to be sent to BFERs whose BFR-IDs are respectively 1, 2, and 3, the BIER packet needs to be first sent to a neighbor (the node B) of the node A, and an edge BFR whose BFR-ID is 4 is the node A itself. Therefore, a BIFT entry created by the node A is shown as follows:
forwarding entry 1: neighbor (Nbr) = B, and forwarding bit mask (forwarding bit mask, FBM) = 0111; and
forwarding entry 2: Nbr* = A, and FBM = 1000.

The forwarding entry 1 is used to represent that when any one of the first bit, the second bit, and the third bit from right to left in the BitString in the BIER packet is 1, the BIER packet is sent to the neighbor (the node B) of the node A. Nbr = B represents that the neighbor of the node A is the node B.

The forwarding entry 2 is used to represent that when the fourth bit from right to left in the BitString in the BIER packet is 1, the BIER packet is sent to the node A. For the node A itself, the node A removes the BIER header and performs forwarding based on information in the original multicast data packet. It should be noted that in the foregoing forwarding entry 2, * is used to identify the Nbr as the node itself. For example, for the node A, Nbr* = A represents that a neighboring node of the node A is the node A itself. Similarly, another node in FIG. 4 may also create a BIFT entry based on a neighboring node of the another node itself. For the BIFT entry created by the another node, refer to FIG. 4. Details are not described herein again.

After receiving the original multicast data packet, the node A being as the BFIR at the ingress of the BIER domain encapsulates the BIER header before the original multicast data packet. It should be understood that, for ease of description, the node A being as the BFIR at the ingress of the BIER domain is referred to as an ingress node A for short. As an example, after receiving the original multicast data packet, the ingress node A may learn of a destination node of the original multicast data packet based on a BFR-ID flooded by using a border gateway protocol BGP message. For example, a receiver of the original multicast data packet is a destination node E whose BFR-ID is 3, a destination node F whose BFR-ID is 2, and a destination node D whose BFR-ID is 1. The ingress node A encapsulates the BitString in the BIER header as 0111, and forwards the encapsulated BIER packet to the neighboring node B based on the forwarding entry 1. After receiving the BIER packet, the node B determines, based on the BitString being 0111 and the BIFT entry, that the BIER packet needs to be respectively sent to the node C and the node E. When sending the BIER packet to the node C, the node B may perform an AND operation on the BitString (0111) in the BIER header and an FBM field corresponding to Nbr = C in the BIFT entry. In this embodiment of this application, a result of the AND operation is 0011. Therefore, the node B may modify the BitString in the BIER header to 0011 and send 0011 to the node C. Similarly, when sending the BIER packet to the node E, the node B may modify the BitString in the BIER header to 0100. After receiving the BIER packet, the node E determines, based on the BitString being 0100, that the BIER packet is to be sent to a neighboring node E. Because the node E determines that the neighboring node E is the node E itself based on an identifier * in the forwarding table, the node E being as an egress BFER in the BIER domain may perform decapsulation to obtain the original multicast data packet from the BIER packet, and perform forwarding based on information in an inner original multicast data packet.

During BIER-MPLS encapsulation, a first 32 bits of the BIER header are an MPLS label code, and a first 20 bits of the first 32 bits are an MPLS label value. The MPLS label value changes in a forwarding process. For example, when the ingress node A sends a packet to the node B, an MPLS label value of the node B needs to be encapsulated. When the node B sends a packet to the node C, an MPLS label value of the node C needs to be encapsulated. In this embodiment of this application, MPLS label values allocated by the node A/the node B/the node C/the node D/the node E/the node F are respectively 100/200/300/400/500/600, and these MPLS label values need to be carried in the BIER encapsulation information and flooded to the another BFR in the BIER domain according to the routing protocol, so that the node A can learn of the MPLS label value of the node B. The MPLS label that identifies the BIER information is also referred to as a BIER label.

In this embodiment of this application, a bit position configured by the edge BFR is flooded in the BIER domain in advance by using an interior gateway protocol (interior gateway protocol, IGP) or a border gateway protocol (border gateway protocol, BGP), so that each BFR in the BIER domain forms a bit index forwarding table (bit index forwarding table, BIFT) for guiding forwarding of the original multicast data packet in the BIER domain. The information flooded in the BIER domain along with the IGP or the BGP is referred to as the BIER information. When receiving the BIER packet encapsulated with the BIER header, the BFR forwards the BIER packet to the destination node based on the BIFT entry.

In this embodiment of this application, the interior gateway protocol IGP may include but is not limited to an open shortest path first (open shortest path first, OSPF) protocol, an intermediate system to intermediate system (intermediate system to intermediate system, ISIS) protocol, and the like.

It should be understood that the BIER domain (BIER domain) refers to a network area in which the BIER information can be flooded by using the IGP or the BGP and the BIFT entry can be created. The BIER domain includes the BFIR and the BFER. The BIER information may include but is not limited to a BFR ID of each edge BFR. As an example, the IGP is deployed and the BIER information is flooded in an autonomous system (autonomous system, AS) domain. The AS domain is the BIER domain (BIER domain).

Generally, a large-scale network is divided into a plurality of domains. For example, the network can be divided into different ASs based on different administrative domains. A border of the AS can be an autonomous system border router (autonomous system border router, ASBR). The IGP may be deployed and the BIER information is flooded in different ASs. If the BGP is deployed between a plurality of ASs, but the BIER information is not flooded, the plurality of ASs may be different BIER domains (BIER domain).

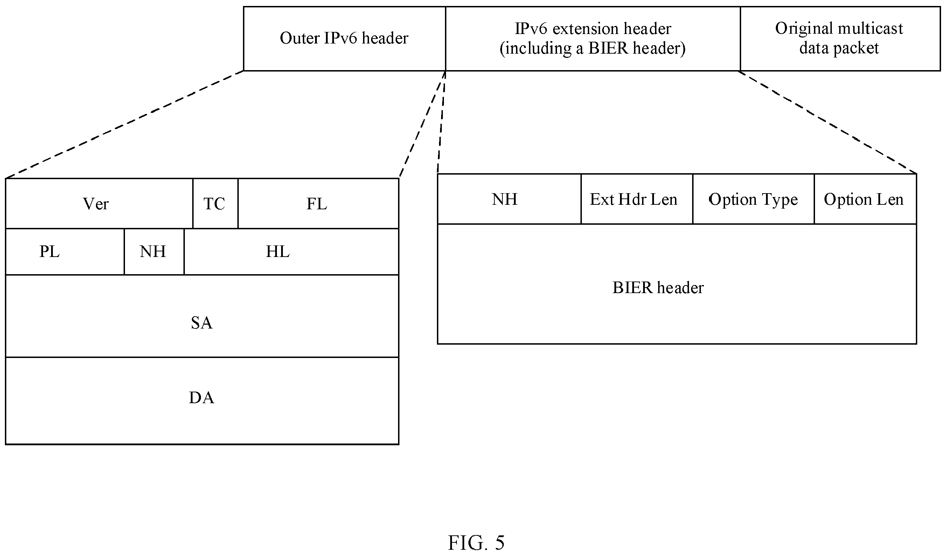

The following describes in detail a BIERv6 encapsulation related technology with reference to FIG. 5.

It should be understood that BIERv6 encapsulation is a solution formed by combining advantages of the native IPv6 and the BIER. A packet format under the BIERv6 encapsulation is: an IPv6 header + a BIER header + an original multicast data packet. The BIER header may be included in an IPv6 extension header, and the original multicast data packet is used as a payload (payload) of an outer IPv6 header.

Under this encapsulation, the IPv6 header and the IPv6 extension header including the BIER header jointly form an outer packet header of the inner original multicast data packet. The outer packet header of the inner original multicast data packet may also be referred to as a BIERv6 header in this embodiment of this application.

The IPv6 extension header including the BIER header is not specifically limited in this embodiment of this application. For example, the IPv6 extension header may be a destination option header (destination option header, DOH). For another example, the IPv6 extension header may also be a routing header (routing header, HR).

FIG. 5 is a schematic block diagram of possible BIERv6 encapsulation. Referring to FIG. 5, the BIER header may be located in the IPv6 extension header, for example, located in the DOH.

It should be understood that the DOH is a type, length, and value (type length value, TLV) format, where the BIER header is used as option data in an option TLV of the DOH. An option type in the option TLV identifies a format of the option data. An option length in the option TLV identifies a length of the option data.

It should be noted that, during the BIERv6 encapsulation, the BIER header format in the DOH is not specifically limited in this embodiment of this application, provided that the BIER header includes the BitString field. The BIER header format may be the format shown in FIG. 2, the format shown in FIG. 3, or another format. For example, under the BIERv6 encapsulation, a proto field, a DSCP field, and the like may further be deleted from the BIER header as long as the BIER header includes a bit string (BitString) used for bit index explicit replication. For specific detailed descriptions of the BIER header format, refer to the descriptions in FIG. 2 or FIG. 3. Details are not described herein again.

The following describes fields in the outer IPv6 header in detail.

Version (version, Ver) field identifies an IP version number, and a value of 6 represents IPv6.

Traffic class (traffic class, TC) field identifies a priority of a packet.

Flow label (flow label, FL) field may be used to label a same flow label value to a plurality of packets that belong to one traffic, and label another flow label value to a plurality of packets that belong to different traffic. When the packet is forwarded, the different traffic can be distributed to different links based on the flow label, and a plurality of packets of the same traffic are forwarded through a same link.

Payload length (payload length, PL) field represents a length of a packet.

Next header (Next Header, NH) field represents a type of a next header of a packet, for example, may represent an IPv6 extension header.

Hop limit (Hop Limit, HL) field represents a hop limit of a packet.

Source address (source address, SA) field identifies a source address of a packet.

Destination address (destination address, DA) field identifies a destination address of a packet.

The BIER domain shown in FIG. 4 is used as an example. The node A is used as an ingress node of an IPv6 network. After receiving a multicast data packet, the node A encapsulates the packet after the BIERv6 header. In other words, after the outer IPv6 header and the IPv6 extension header including the BIER header, the encapsulated BIERv6 packet is obtained. The BIER packet header included in the Ipv6 extension header carries the BitString representing a set of destination nodes.

The node A sends the encapsulated BIERv6 packet to the node B based on the BIER packet header and BitString information of the BIER packet header. During the sending, the destination address field in the IPv6 packet header uses a unicast address of the node B (for example, B:: 100). The node B sends the packet to the node C and the node E based on the BIER packet header and BitString information of the BIER packet header. During the sending, the destination address field in the IPv6 header uses a unicast address of the node C (for example, C::100) and a unicast address of the node E (for example, E::100). Similarly, the node C sends the packet to the node D and the node F based on the BIER packet header and BitString information of the BIER packet header. During the sending, the destination address field in the IPv6 header uses a unicast address of the node D (for example, D::100) and a unicast address of the node F (for example, D::100).

As network security becomes more and more important, detection on an invalid packet becomes more and more important. In a possible case, in a process of forwarding the BIER packet, the BIER packet is vulnerable to an attack from an attacker, so that the BIER packet becomes the invalid BIER packet. The network architecture shown in FIG. 1 is used as an example. In a process of forwarding the BIER packet, the BitString field in the packet header information of the BIER packet changes. As an example, the attacker can attack a link between a BFIR1 and the BFR by connecting the link to a device of the attacker. For example, after receiving the BIER packet sent by the BFIR1, the attacker sets all variable fields (BitString) in the forwarding process of the BIER packet to 1, and then sends a tampered BIER packet to the BFR. As another example, the attacker attacks a BFIR1 node. For example, a configuration is modified on the BFIR1 node. As a result, when encapsulating a multicast packet, the BFIR1 node sets all BitString fields to 1, and then sends a tampered BIER packet to the BFR. As another example, an error occurs when the BFIR1 node encapsulates the BitString. The BIER packet may be referred to as the invalid packet, and the invalid BIER packet may cause multicast traffic to be replicated in a large amount in the BIER domain, and the multicast traffic is sent to a device that does not need to receive the multicast traffic. This causes a waste of link bandwidth, and even causes a denial of service (denial of service, DoS) on a link.

According to the packet detection method provided in the embodiments of this application, the invalid BIER packet can be detected, to enhance security in a BIER packet forwarding process or accuracy of BIER packet encapsulation.

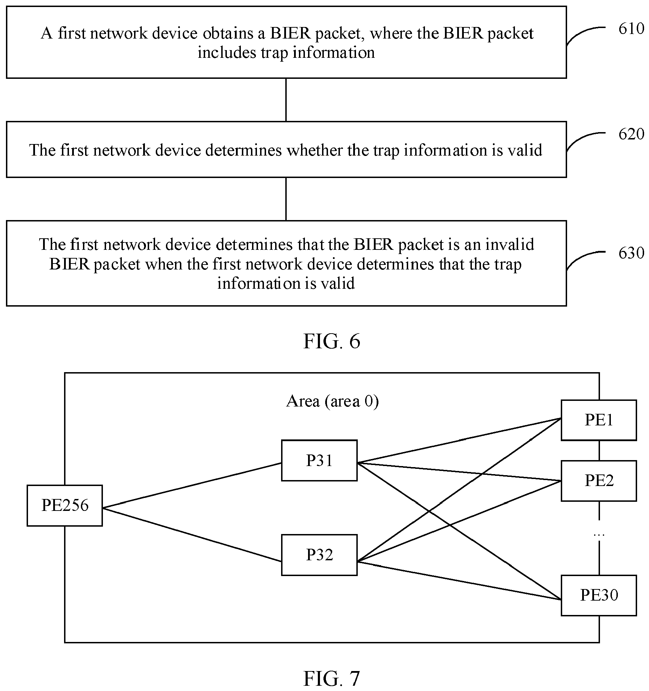

FIG. 6 is a schematic flowchart of a packet detection method according to an embodiment of this application. Referring to FIG. 6, the method may include steps 610 to 630. The following separately describes steps 610 to 630 in detail.

Step 610: A first network device obtains a BIER packet, where the BIER packet includes trap information.

In this embodiment of this application, the first network device may be an ingress node in a BIER domain, for example, the BFIR 1 or the BFIR 2 shown in FIG. 1, or may be another forwarding node in a BIER domain, for example, the BFR, the BFER 1, or the BFER 2 shown in FIG. 1.

An example in which the first network device is the ingress node in the BIER domain is used. That a first network device obtains a BIER packet may be understood as that the first network device obtains a BIER packet generated by the first network device. Specifically, as the ingress node, the first network device may receive a multicast data packet, encapsulate the multicast data packet to obtain the BIER packet, and obtain the BIER packet generated by the first network device.

An example in which the first network device is the another forwarding node in the BIER domain is used. That a first network device obtains a BIER packet may be understood as that the first network device receives a BIER packet sent by the another node.

In this embodiment of this application, the BIER packet may include the trap information, and the trap information is used to indicate whether the BIER packet is a valid BIER packet. In a possible implementation, a BitString field in the BIER packet includes the trap information. For example, the trap information includes one or more bits.

It should be understood that, in this embodiment of this application, the trap information may be, for example, information that is not used in a forwarding process of the BIER packet. For example, a bit that is not used in the BitString is used as the trap information. In this way, the trap information is set in the BIER packet. In an implementation, when an attacker modifies the trap information, a behavior that the attacker maliciously tampers with the BIER packet can be monitored. In another implementation, if the BIER packet is incorrectly encapsulated by the network device, checking whether the trap information is modified can further detect an incorrect or erroneous behavior that occurs when the network device in the BIER domain encapsulates packet header information of the BIER packet.

Specifically, for example, the trap information includes one or more bits. In this embodiment of this application, the bit that is not used in the BitString in the packet header information of the BIER packet may be selected as a trap or a honeypot. The bit corresponds to a BFR-id. For example, in one BIER domain or one BIERv6 domain, 100 routers are used as BFER nodes and need to decapsulate received BIER packets and send the decapsulated BIER packets to multicast receivers connected to the 100 routers. These routers are planned in a BFR-id range of (Sub-domain = 0, BSL = 256, SI = 0). BFR-ids are 1 to 100. In this case, BFR-id = 101 may be configured as a trap BFR-id. Alternatively, BFR-id = 101 to 256 may all be configured as trap BFR-ids. Alternatively, (Sub-domain = 0, BSL = 256, SI = 0) and (Sub-domain = 0, BSL = 256, SI = 1) in the BIER domain may be configured, and BFR-id = 101 to 512 may all be configured as trap BFR-ids. These trap BFR-ids may correspond to the trap information described above.

It should be noted that, an example in which the trap information includes a plurality of bits is used. At least two of the plurality of bits may be adjacent to each other or may not be adjacent to each other. This is not specifically limited in this application. If the at least two of the plurality of bits are set to be non-adjacent to each other, a plurality of traps are set in the BIER packet, to improve accuracy of BIER packet encapsulation or increase a probability of detecting a behavior that the BIER packet is maliciously tampered with.

In this embodiment of this application, the trap BFR-id may be configured on the first network device, to protect the first network device. Optionally, the trap BFR-ids may further be configured on a plurality of or even all network devices, to protect the plurality of or even all the network devices.

There are a plurality of specific configuration modes, and this is not specifically limited in this application. In a possible implementation, the specific configuration mode may be manual configuration by an administrator. In another possible implementation, the specific configuration mode may be unified configuration delivery by a network management device. For example, the first network device receives, through a secure channel, control message unifiedly delivered by the network management device. The secure channel may be a secure shell (Secure shell, SSH) channel or a transport layer secure (transport layer secure, TLS) channel. The control message may be a command line message or a network configuration (network configuration, Netconf) protocol message. At least one configured trap bit may be identified by one bit-forwarding router identifier BFR-id value in the control message, where the BFR-id is also referred to as a trap BFR-id.

It should be understood that the SSH is a network protocol and is mainly used for a secure connection and interaction between devices, and is mainly used for encrypted transmission between devices.

Step 620: The first network device determines whether the trap information is valid.

After obtaining the BIER packet, the first network device may determine whether the trap information in the BIER packet is valid. Specifically, for example, the trap information includes one or more bits. If a value of the bit is 1, it may be understood that the bit is valid. If a value of the bit is 0, it may be understood that the bit is invalid.

Specifically, referring to the example in step 610, an example in which the configured trap BFR-ids are the BFR-id 101 to the BFR-id 256 is used. The first network device may determine whether bits of the BFR-id 101 to the BFR-id 256 in the BitString field are valid.

Optionally, before step 620, the first network device may further receive the control message, where the control message is used by the first network device to determine or verify the trap information in the BIER packet.

Step 630: The first network device determines that the BIER packet is an invalid BIER packet when the first network device determines that the trap information is valid.

In this embodiment of this application, for example, the trap information includes a plurality of bits. If any one of the plurality of bits is valid, it may be determined that the BIER packet is the invalid BIER packet. In other words, if a value of the any of the plurality of bits is 1, it indicates that the BIER packet is maliciously tampered with or incorrectly encapsulated, and the BIER packet is the invalid BIER packet.

Specifically, referring to the example in step 610, the example in which the configured trap BFR-ids are the BFR-id 101 to the BFR-id 256 is used. If the first network device determines that a value of any bit from the BFR-id 101 to the BFR-id 256 in the BitString field is 1, it indicates that the BIER packet is maliciously tampered with or incorrectly encapsulated, and the BIER packet is the invalid BIER packet.

Optionally, after determining that the BIER packet is the invalid BIER packet, the first network device may further process the invalid BIER packet, for example, record log information or send an alarm, so that the administrator finds that a forwarded BIER packet is the invalid packet, thereby improving security in a BIER packet forwarding process or accuracy of BIER packet encapsulation. Specifically, in a possible implementation, the first network device may create a first entry, where the first entry includes the trap information, and the first entry indicates to process the BIER packet, for example, send the alarm or record the log information when the trap information is valid.

Optionally, in some embodiments, for example, the trap information includes a plurality of bits. If the plurality of bits are all invalid, the first network device may determine that the BIER packet is a valid BIER packet. In other words, if values of the plurality of bits each are 0, it indicates that the BIER packet is not maliciously tampered with or incorrectly encapsulated, and the BIER packet is the valid BIER packet.

Specifically, referring to the example in step 610, the example in which the configured trap BFR-ids are the BFR-id 101 to the BFR-id 256 is used. If the first network device determines that values of all bits from the BFR-id 101 to the BFR-id 256 in the BitString field each are 0, it indicates that the BIER packet is not maliciously tampered with or incorrectly encapsulated, and the BIER packet is the valid BIER packet.

In this embodiment of this application, if determining that the BIER packet is the valid BIER packet, the first network device may forward the BIER packet. Specifically, referring to the example in step 610, the BitString in the packet header information of the BIER packet includes a plurality of original bits. For example, BFR-ids are respectively 1 to 100, and these bits mark all destination nodes of traffic. A BFR in the BIER domain may forward the BIER packet based on the plurality of original bits in the BitString, for example, whether the BFR-ids being respectively 1 to 100 are valid. For a detailed BIER packet forwarding process, refer to the description in FIG. 4. Details are not described herein again.

In the foregoing technical solution, the trap information may be set, and whether the BIER packet is the valid BIER packet is determined by determining whether the trap information is valid. In this way, on one hand, if the attacker tampers with the BIER packet, the trap information in the BIER packet is valid. The first network device may detect the behavior that the BIER packet is maliciously tampered with, or may increase a probability of detecting the behavior that the BIER packet is maliciously tampered with, thereby enhancing security in the BIER packet forwarding process. On the other hand, if a fault or an error occurs when the network device in the BIER domain encapsulates the packet header information of the BIER packet, this case can further be detected by using the method provided in this application, thereby improving accuracy of BIER packet encapsulation.

Further, in the solution provided in this embodiment of this application, the invalid BIER packet is identified, so that an invalid device may further be locked, or whether a fault exists in a network device that forwards and processes the BIER packet may be determined.

Optionally, in some embodiments, to prevent the attacker from evading the foregoing set trap information, so that the behavior that the BIER packet is maliciously tampered with cannot be detected or the probability of detecting the behavior that the BIER packet is maliciously tampered with is reduced, in this application, the foregoing set trap information (for example, the trap BFR-id) may alternatively be flooded in the BIER domain.

Specifically, one valid BFR-id may be configured on one or more intermediate forwarding devices (for example, the device is actually neither used as the BFIR nor used as the BFER). The valid BFR-id indicates that the intermediate forwarding device is the BFIR or the BFER in the BIER domain. The valid BFR-id is flooded in the BIER domain through an IGP or a BGP. In addition, the valid BFR-id is configured as the trap BFR-id. For some advanced attackers (for example, an attacker has compromised a BFIR node and checked a BIER routing table), the attacker may check which BFR-ids are BFR-ids flooded by the IGP or the BGP and performs tampering based on the flooded BFR-ids. For example, bits in bit strings of packets corresponding to all flooded BFR-ids are tampered with to 1, and bits corresponding to other BFR-ids that are not flooded are not tampered with, to avoid a trap. However, if the trap BFR-ids are respectively configured for one or more intermediate forwarding devices and are flooded, a behavior even if the attacker tampers with the flooded BFR-id can be detected, thereby increasing the probability of detecting the behavior that the BIER packet is maliciously tampered with.

It should be understood that a process in which the one or more intermediate forwarding devices flood the valid BFR-id is similar to a process in which the edge BFR floods to the another BFR in the BIER domain according to the routing protocol in FIG. 4. For details, refer to descriptions in FIG. 4. Details are not described herein again.

With reference to FIG. 7 to FIG. 9, the following describes in detail a specific implementation of the trap BFR-ids flooded by the one or more intermediate forwarding devices. It should be understood that the examples in FIG. 7 to FIG. 9 are merely intended to help a person skilled in the art understand the embodiments of this application, instead of limiting the embodiments of this application to a specific value or a specific scenario shown in the example. A person skilled in the art apparently can make various equivalent modifications or changes according to the examples shown in FIG. 7 to FIG. 9, and such modifications and changes also fall within the scope of the embodiments of this application.

FIG. 7 is a schematic diagram of a packet detection scenario according to an embodiment of this application. Referring to FIG. 7, BFER nodes in a BIER domain (for example, an area (area) 0) include a PE1 to a PE30, and BFR-ids of the PE1 to the PE30 are respectively 1 to 30. The BFIR nodes include a PE256, and a BFR-id of the PE256 is 256.

It should be understood that the BIER domain may be divided into one or more areas (area), and the area 0 herein may be one area in the BIER domain.

As an example, a BFR-id 31 to a BFR-id 255 may all be set as trap BFR-ids, and BFR-ids 31 to 255 are all configured as trap BFR-ids on each device in the BIER domain (for example, the area 0). It should be understood that the configuration may be saved in an encrypted manner so that an attacker cannot view it. In other words, which BFR-ids stored in the encrypted manner herein are trap BFR-ids. For example, the BFR-id 31 to the BFR-id 255 stored in the encrypted manner are the trap BFR-ids.

Referring to FIG. 7, a P31 node and a P32 node are intermediate forwarding nodes. In this embodiment of this application, the BFR-id 31 may further be configured for the P31 node, the BFR-id 32 may further be configured for the P32 node, and the BFR-id 31 and the BFR-id 32 are flooded in a network. It should be noted that the BFR-id 31 configured for the P31 node and the BFR-id 32 configured for the P32 node do not need to be stored in the encrypted manner. In other words, in this embodiment of this application, on a basis that which BFR-ids stored in the encrypted manner herein are trap BFR-ids, some or all of the trap BFR-ids and normal BFR-ids may not be distinguished to be flooded in the BIER domain.

For some advanced attackers (for example, an attacker has compromised a BFIR node and checked a BIER routing table), the attacker may check which BFR-ids are BFR-ids flooded by an IGP or a BGP and performs tampering based on the flooded BFR-ids. For example, bits in bit strings of packets corresponding to all flooded BFR-ids are tampered with to 1, and bits corresponding to other BFR-ids that are not flooded are not tampered with, to avoid a trap. However, if the trap BFR-ids are respectively configured for one or more intermediate forwarding devices and are flooded, a behavior even if the attacker tampers with the flooded BFR-id can be detected, thereby increasing the probability of detecting the behavior that the BIER packet is maliciously tampered with.

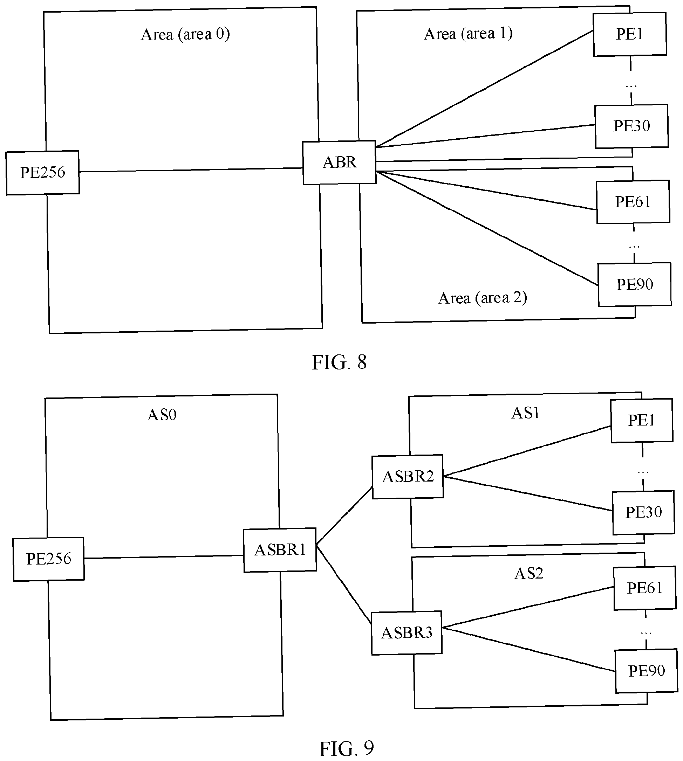

FIG. 8 is a schematic diagram of another packet detection scenario according to an embodiment of this application. Referring to FIG. 8, a BIER domain may include a plurality of areas, for example, an area 0, an area 1, and an area 2. BFER nodes in the area 1 include a PE1 to a PE30, and BFR-ids of the PE1 to the PE30 are respectively 1 to 30. BFER nodes in the area 2 include a PE1 to a PE30, and BFR-IDs of the PE1 to the PE30 are respectively 1 to 30. A border of different areas is an area border router (area border router, ABR), and the ABR belongs to the area 0, the area 1, and the area 2.

It should be understood that the area 0, the area 1, and the area 2 herein may be three areas in the BIER domain. It should be noted that the BIER domain shown in FIG. 8 may include a plurality of areas (area). For ease of description, an example in which the BIER domain includes the three areas is used for description.

As an example, a BFR-id 31 to a BFR-id 60 and a BFR-id 91 to a BFR-id 120 may all be set as trap BFR-ids, and a BFR-id 31 to a BFR-id 60 and a BFR-id 91 to a BFR-id 120 are all configured as trap BFR-ids on each device in the BIER domain (for example, the area 0, the area 1, and the area 2). It should be understood that the configuration may be saved in an encrypted manner so that an attacker cannot view it. In other words, which BFR-ids stored in the encrypted manner herein are trap BFR-ids. For example, the BFR-id 31 to the BFR-id 60 and the BFR-id 91 to the BFR-id 120 stored in the encrypted manner are the trap BFR-ids.

As shown in FIG. 8, in the case that there are a plurality of areas in an IGP, the ABR may advertise a range of BFR-ids from 1 to 30 and another range of BFR-ids from 61 to 90 to the area 0. In this embodiment of this application, the BFR-id 31 to the BFR-id 60 and the BFR-id 91 to the BFR-id 120 are all set to the trap BFR-ids, the ABR can advertise a range of the BFR-id 1 to the BFR-id 120 to the area 0. In other words, in this embodiment of this application, on a basis that which BFR-ids stored in the encrypted manner herein are trap BFR-ids, some or all of the trap BFR-ids and normal BFR-ids may not be distinguished to be flooded in the BIER domain.

For some advanced attackers (for example, an attacker has compromised a BFIR node and checked a BIER routing table), the attacker may check which BFR-ids are BFR-ids flooded by the IGP or a BGP and performs tampering based on the flooded BFR-ids. For example, bits in bit strings of packets corresponding to all flooded BFR-ids are tampered with to 1, and bits corresponding to other BFR-ids that are not flooded are not tampered with, to avoid a trap. However, if the trap BFR-ids are respectively configured for one or more intermediate forwarding devices and are flooded, a behavior even if the attacker tampers with the flooded BFR-id can be detected, thereby increasing the probability of detecting the behavior that the BIER packet is maliciously tampered with.

FIG. 9 is a schematic diagram of another packet detection scenario according to an embodiment of this application. Generally, a large-scale network is divided into a plurality of domains. For example, a BIER domain is divided into different autonomous system (autonomous system, AS) domains based on different administrative domains. For example, FIG. 9 includes an AS0, an AS1, and an AS2. BFER nodes in the AS1 include a PE1 to a PE30, and BFR-ids of the PE1 to the PE30 are respectively 1 to 30. BFER nodes in the AS2 include a PE61 to a PE90, and BFR-ids of the PE61 to the PE90 are respectively 61 to 90.

It should be noted that, in this embodiment of this application, the BIER domain may be divided into a plurality of AS domains. For ease of description, an example in which the BIER domain includes three AS domains (for example, the AS0, the AS1, and the AS2) is used for description in FIG. 9.

It should be understood that a border of the AS domain may be an autonomous system border router (autonomous system border router, ASBR). For example, in FIG. 9, a border node of the AS0 is an ASBR1, a border node of the AS1 is an ASBR2, and a border node of the AS2 is an ASBR3. The ASBR1, the ASBR2, and the ASBR3 are connected to each other.

It should further be understood that in this embodiment of this application, the plurality of AS domains may be configured as one BIER domain. For example, the plurality of AS domains are configured as one BIER domain through static configuration. An IGP may be deployed and BIER information is flooded in different ASs in the BIER domain.

Referring to FIG. 9, in a cross-AS domain scenario, a border node of each AS domain may be statically configured. For example, a next hop of the BFR-id 1 to the BFR-id 30 on the ASBR1 is configured as the ASBR2 (the BFR-id 1 to the BFR-id 30 next-hop ASBR2). A next hop of the BFR-id 61 to the BFR-id 90 on the ASBR1 is configured as the ASBR3 (the BFR-id 61 to the BFR-id 90 next-hop ASBR3). A next hop of the BFR-id 1 to the BFR-id 30 and the BFR-id 61 to the BFR-id 90 on a PE256 is configured as the ASBR1 (The BFR-id 1 to the BFR-id 30 and the BFR-id 61 to the BFR-id 90 next-hop ASBR1).

As an example, a BFR-id 31 to a BFR-id 60 and a BFR-id 91 to a BFR-id 120 may all be set as trap BFR-ids, and a BFR-id 31 to a BFR-id 60 and a BFR-id 91 to a BFR-id 120 are all configured as trap BFR-ids on each device in the BIER domain (for example, the AS0, the AS1, and the AS2).

Specifically, referring to FIG. 9, in order to set the trap BFR-id, on one hand, the following configuration may be performed. The trap BFR-id on the PE256 and the ASBR1 is configured as the BFR-id 31 to the BFR-id 60 and the BFR-id 91 to the BFR-id 120. This configuration can be saved in an encrypted manner so that an attacker cannot view it. It should be understood that the configuration may be saved in the encrypted manner so that the attacker cannot view it. In other words, which BFR-ids stored in the encrypted manner herein are trap BFR-ids. For example, the BFR-id 31 to the BFR-id 255 stored in the encrypted manner are the trap BFR-ids. On the other hand, these trap BFR-ids and normal BFR-ids can be configured without being distinguished, and saved in a non-encrypted manner, so that the attacker can view it. For example, these trap BFR-ids and the normal BFR-ids can be configured in one BFR-id range. For example, a next hop of the BFR-id 1 to the BFR-id 60 on the ASBR1 is configured as the ASBR2 (the BFR-id 1 to the BFR-id 60 next-hop ASBR2). The BFR-id 31 to the BFR-id 60 are the trap BFR-ids. A next hop of the BFR-id 61 to the BFR-id 120 on the ASBR1 is configured as the ASBR3 (the BFR-id 61 to the BFR-id 120 next-hop ASBR3). The BFR-id 91 to the BFR-id 120 are the trap BFR-ids. A next hop of the BFR-id 1 to the BFR-id 120 on the PE256 is configured as the ASBR1 (the BFR-id 1 to the BFR-id 120 next-hop ASBR1). The BFR-id 31 to the BFR-id 60 and the BFR-id 91 to the BFR-id 120 are the trap BFR-ids.

Based on the configurations of 2, 3, and 4, the attacker may perform a DoS attack on a bit 1 of the BFR-id 31 to the BFR-id 60 or the BFR-id 91 to the BFR-id 120. However, processing of the trap BFR-id is triggered to expose the attack. This can detect the behavior that the BIER packet is maliciously tampered with or increase a probability of detecting the behavior that BIER packet is maliciously tampered with.

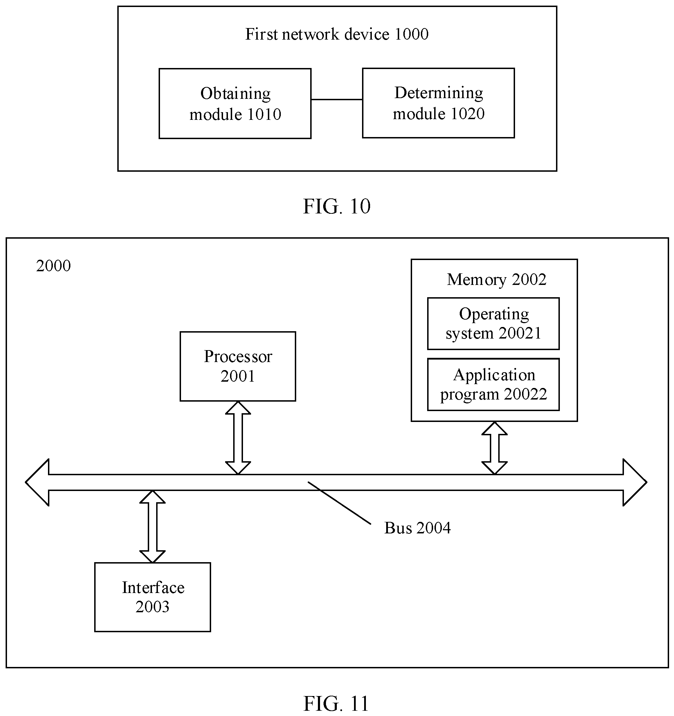

The foregoing describes in detail the packet detection method provided in the embodiments of this application with reference to FIG. 1 to FIG. 9. The following describes in detail apparatus embodiments of this application with reference to FIG. 10 to FIG. 12. It should be understood that the descriptions of the method embodiments correspond to descriptions of the apparatus embodiments. Therefore, for parts that are not described in detail, refer to the foregoing method embodiments.

FIG. 10 is a schematic structural diagram of a first network device 1000 according to an embodiment of this application. The first network device 1000 shown in FIG. 10 may perform corresponding steps performed by the first network device in the method in the foregoing embodiment. As shown in FIG. 10, the first network device 1000 includes an obtaining module 1010 and a determining module 1020.

The obtaining module 1010 is configured to obtain a bit index explicit replication BIER packet, where the BIER packet includes trap information, and the trap information is used to indicate whether the BIER packet is a valid BIER packet.

The determining module 1020 is configured to determine whether the trap information is valid.

The determining module 1020 is further configured to determine that the BIER packet is an invalid BIER packet when it is determined that the trap information is valid.

Optionally, the BIER packet includes a bit string BitString, and the bit string includes the trap information.

Optionally, the trap information includes a plurality of bits.

Optionally, at least two of the plurality of bits are not adjacent to each other.

Optionally, the determining module 1020 is specifically configured to determine that the BIER packet is the invalid BIER packet when it is determined that any one of the plurality of bits is valid.

Optionally, the determining module 1020 is further configured to determine that the BIER packet is the valid BIER packet when it is determined that all the plurality of bits are invalid.

Optionally, the obtaining module 1010 is further configured to receive BIER information flooded by a second network device, where the second network device is an intermediate forwarding device in a BIER domain, the BIER domain includes the first network device, the BIER information includes a bit-forwarding router identifier BFR-ID of the second network device, and the BFR-ID is used to indicate that the second network device is an edge forwarding device in the BIER domain.

Optionally, the obtaining module 1010 is further configured to receive a control message, where the control message indicates the trap information in the BIER packet; and obtain or determine or verify the trap information in the BIER packet based on the control message.

Optionally, the first network device 1000 further includes a creation module 1030, configured to create a first entry, where the first entry includes the trap information, and the first entry indicates to send an alarm or record log information when the trap information is valid.

The determining module 1020 is further configured to send the alarm or record the log information when it is determined that the trap information is valid

FIG. 11 is a schematic structural diagram of hardware of a first network device 2000 according to an embodiment of this application. The first network device 2000 shown in FIG. 11 may perform corresponding steps performed by the first network device in the method in the foregoing embodiment.

As shown in FIG. 11, the first network device 2000 includes a processor 2001, a memory 2002, an interface 2003, and a bus 2004. The interface 2003 may be implemented in a wireless or wired manner, and may specifically be a network adapter. The processor 2001, the memory 2002, and the interface 2003 are connected by using the bus 2004.

The interface 2003 may specifically include a transmitter and a receiver, and is configured for the first network device to implement the foregoing receiving and sending. For example, the interface 2003 is configured to obtain a bit index explicit replication BIER packet.

The processor 2001 is configured to perform processing performed by the first network device in the foregoing embodiment. For example, the processor is configured to determine whether the trap information is valid, is further configured to determine that the BIER packet is an invalid BIER packet when it is determined that the trap information is valid, and is used in another process of the technology described herein. The memory 2002 includes an operating system 20021 and an application program 20022, and is configured to store a program, code, or an instruction. When executing the program, the code, or the instruction, a processor or a hardware device may complete a processing process of the first network device in the foregoing method embodiment. Optionally, the memory 2002 may include a read-only memory (read-only memory, ROM) and a random access memory (random access memory, RAM). The ROM includes a basic input/output system (basic input/output system, BIOS) or an embedded system, and the RAM includes an application program and an operating system. When the first network device 2000 needs to run, a bootloader in the BIOS or the embedded system that is built into the ROM is used to boot a system to start, and boot the first network device 2000 to enter a normal running state. After entering the normal running state, the first network device 2000 runs the application program and the operating system in the RAM, to complete the processing processes of the first network device 2000 in the method embodiment.

It may be understood that FIG. 11 merely shows a simplified design of the first network device 2000. In actual application, the first network device may include any quantity of interfaces, processors, or memories.

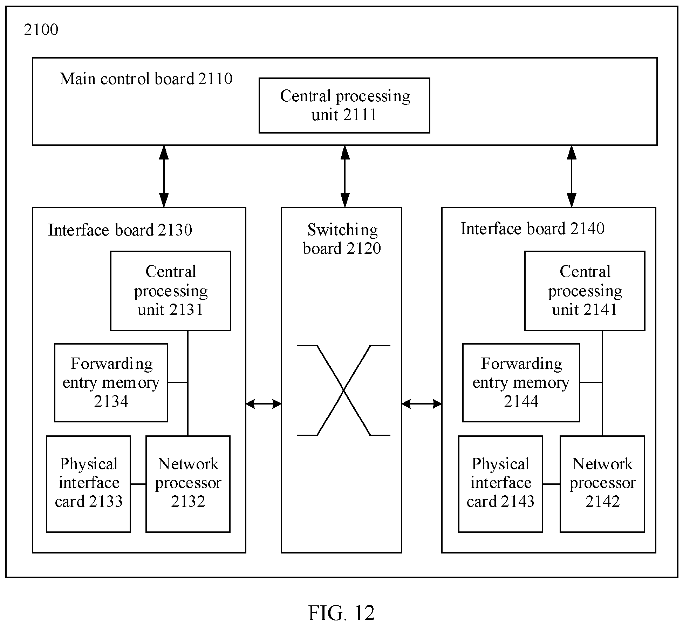

FIG. 12 is a schematic structural diagram of hardware of another first network device 2100 according to an embodiment of this application. The first network device 2100 shown in FIG. 12 may perform corresponding steps performed by the first network device in the method in the foregoing embodiment.

As shown in FIG. 12, the first network device 2100 includes a main control board 2110, an interface board 2130, a switching board 2120, and an interface board 2140. The main control board 2110, the interface boards 2130 and 2140, and the switching board 2120 are connected to a system backboard through a system bus for interworking. The main control board 2110 is configured to complete functions such as system management, device maintenance, and protocol processing. The switching board 2120 is configured to exchange data between interface boards (the interface board is also referred to as a line card or a service board). The interface boards 2130 and 2140 are configured to provide various service interfaces (for example, a POS interface, a GE interface, and an ATM interface), and forward a data packet.

The interface board 2130 may include a central processing unit 2131, a forwarding entry memory 2134, a physical interface card 2133, and a network processor 2132. The central processing unit 2131 is configured to control and manage the interface board, and communicate with a central processing unit on the main control board. The forwarding entry memory 2134 is configured to store an entry, for example, the foregoing forwarding entry. The physical interface card 2133 is configured to receive and send traffic.

It should be understood that an operation on the interface board 2140 is consistent with an operation on the interface board 2130 in this embodiment of this application. For brevity, details are not described. It should be understood that the first network device 2100 in this embodiment may correspond to the functions and/or the various implemented steps in the foregoing method embodiment. Details are not described herein.

In addition, it should be noted that there may be one or more main control boards. When there are a plurality of main control boards, a primary main control board and a secondary main control board may be included. There may be one or more interface boards. The first network device having a stronger data processing capability provides more interface boards. There may also be one or more physical interface cards on the interface board. There may be no switching board or there may be one or more switching boards. When there are a plurality of switching boards, load sharing and redundancy backup may be implemented together. In a centralized forwarding architecture, the first network device may need no switching board. The interface board provides a function of processing service data of an entire system. In a distributed forwarding architecture, the first network device may have at least one switching board. Data between a plurality of interface boards is exchanged through the switching board, to provide a large-capacity data exchange and processing capability. Therefore, a data access and processing capability of the first network device in the distributed architecture is better than that of the device in the centralized architecture. A specific architecture that is to be used depends on a specific networking deployment scenario. This is not limited herein.

An embodiment of this application further provides a computer-readable medium. The computer-readable medium stores program code. When the computer program code is run on a computer, the computer is enabled to perform the method according to any one of the foregoing aspects. These computer-readable storage devices include but are not limited to one or more of the following: read-only memory (read-only memory, ROM), programmable ROM (programmable ROM, PROM), erasable PROM (erasable PROM, EPROM), flash memory, electrical EPROM (electrically EPROM, EEPROM), and hard drive (hard drive).

An embodiment of this application further provides a chip system. The chip system is applied to a first network device. The chip system includes at least one processor, at least one memory, and an interface circuit. The interface circuit is responsible for exchanging between the chip system and external information. The at least one memory, the interface circuit, and the at least one processor are interconnected by using a line, and the at least one memory stores an instruction. The instruction is executed by the at least one processor, to perform operations of the first network device in the methods according to the foregoing aspects.

In a specific implementation process, the chip may be implemented in a form of a central processing unit (central processing unit, CPU), a micro controller unit (micro controller unit, MCU), a micro processing unit (micro processing unit, MPU), a digital signal processing (digital signal processing, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer program product. The computer program product is applied to a first network device, and the computer program product includes a series of instructions. When the instructions are executed, operations of the first network device in the methods according to the foregoing aspects are performed.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet detection method, wherein the method comprises:
obtaining (610), by a first network device, a bit index explicit replication, BIER packet, wherein the BIER packet comprises trap information, and the trap information is used to indicate whether the BIER packet is a valid BIER packet;
determining (620), by the first network device, whether the trap information is valid; and
determining (630), by the first network device, that the BIER packet is an invalid BIER packet when the first network device determines that the trap information is valid.

2. The method according to claim 1, wherein the BIER packet comprises a bit string, BitString, and the BitString comprises the trap information.

3. The method according to claim 2, wherein the trap information comprises a plurality of bits.

4. The method according to claim 3, wherein at least two of the plurality of bits are not adjacent to each other.

5. The method according to claim 3 or 4, wherein the determining (630), by the first network device, that the BIER packet is an invalid BIER packet when the first network device determines that the trap information is valid specifically comprises: determining, by the first network device, that the BIER packet is the invalid BIER packet when the first network device determines that any one of the plurality of bits is valid.

6. The method according to claim 3 or 4, wherein the method further comprises:
determining, by the first network device, that the BIER packet is the valid BIER packet when the first network device determines that all the plurality of bits are invalid.

7. The method according to any one of claims 1 to 6, wherein the method further comprises:
receiving, by the first network device, BIER information flooded by a second network device, wherein the second network device is an intermediate forwarding device in a BIER domain, the BIER domain comprises the first network device, the BIER information comprises a bit-forwarding router identifier, BFR-ID, of the second network device, and the BFR-ID is used to indicate that the second network device is an edge forwarding device in the BIER domain.

8. The method according to any one of claims 1 to 7, wherein before the determining (620), by the first network device, whether the trap information is valid, the method further comprises:
receiving, by the first network device, a control message, wherein the control message indicates the trap information in the BIER packet; and
obtaining, by the first network device, the trap information in the BIER packet based on the control message.

9. The method according to any one of claims 1 to 8, wherein the method further comprises:
creating, by the first network device, a first entry, wherein the first entry comprises the trap information, and the first entry indicates to send an alarm or record log information when the trap information is valid; and
sending the alarm or recording the log information when the first network device determines that the trap information is valid.

10. A first network device, comprising:
an obtaining module (1010), configured to obtain a bit index explicit replication, BIER packet, wherein the BIER packet comprises trap information, and the trap information is used to indicate whether the BIER packet is a valid BIER packet; and
a determining module (1020), configured to determine whether the trap information is valid, wherein
the determining module (1020) is further configured to determine that the BIER packet is an invalid BIER packet when it is determined that the trap information is valid.

11. The first network device according to claim 10, wherein the BIER packet comprises a bit string, BitString, and the bit string comprises the trap information.

12. The first network device according to claim 11, wherein the trap information comprises a plurality of bits.

13. The first network device according to claim 12, wherein at least two of the plurality of bits are not adjacent to each other.

14. The first network device according to claim 12 or 13, wherein the determining module (1020) is specifically configured to:
determine that the BIER packet is the invalid BIER packet when it is determined that any one of the plurality of bits is valid.

15. A computer-readable storage medium, comprising a computer program, wherein when the computer program is run on a computer, the computer is enabled to perform the method according to any one of claims 1 to 9.
